# EUROPÄISCHE PATENTSCHRIFT

(11) **EP 4 182 172 B1**
(45) Veröffentlichungstag und Bekanntmachung des Hinweises auf die Patenterteilung: **21.01.2026**
(21) Anmeldenummer: 21736326.6
(22) Anmeldetag: 30.06.2021
(51) Int. Cl.: B41J 3/407, G06K 15/02, B25J 9/16

(54) **VERFAHREN ZUM BEDRUCKEN EINES DREIDIMENSIONALEN ARTIKELS**
METHOD FOR PRINTING ON A THREE-DIMENSIONAL ARTICLE
PROCÉDÉ D'IMPRESSION SUR UN ARTICLE TRIDIMENSIONNEL

(30) Priorität: 14.07.2020 BE 202005521
(43) Veröffentlichungstag der Anmeldung: 24.05.2023
(73) Patentinhaber: Phoenix Contact GmbH & Co. KG, 32825 Blomberg (DE)
(72) Erfinder: WEBER, Timo, 32760 Detmold (DE); FALTINSKI, Sebastian, 32657 Lemgo (DE); ENNS, Andreas, 32839 Steinheim (DE); NIEDERHÖFER, Marcus, 32825 Blomberg (DE); REITZ, Mattes, 32657 Lemgo (DE)
(86) Internationale Anmeldenummer: PCT/EP2021/068012
(87) Internationale Veröffentlichungsnummer: WO 2022/012934

(56) Entgegenhaltungen:
- EP-A2- 2 567 822
- WO-A1-2012/115935
- WO-A1-2020/048854
- DE-A1- 102012 006 371
- DE-A1- 102014 108 092
- JP-A- 2008 191 903
- US-A1- 2020 073 365

## Beschreibung

Die Erfindung betrifft ein Verfahren und eine Vorrichtung zum Bedrucken eines dreidimensionalen Artikels.

Zum Bedrucken von zweidimensionalen Artikeln, wie beispielsweise Papier, ist schon seit längerer Zeit der Digitaldruck weit verbreitet. Mittlerweile hat sich der Digitaldruck auch bei der Bedruckung von Artikeln mit einer komplexeren Geometrie, wie beispielsweise der Bedruckung von Fahrzeugteilen oder Verpackungen durchgesetzt. Unter dem Begriff "Digitaldruck" werden üblicherweise Druckverfahren verstanden, bei denen das Druckbild direkt aus einer Datei oder einem Datenstrom von einem Computer in eine Druckmaschine übertragen wird, ohne dass eine statische Druckform benutzt wird. Deshalb eröffnet der Digitaldruck mit seiner dynamischen Druckbilderzeugung die Möglichkeit zum preisgünstigen Individualbedrucken auch von größeren dreidimensionalen Artikeln.

Ein weitverbreitetes Verfahren im Bereich des Digitaldrucks ist der Tintenstrahl- oder Inkjetdruck. Mit einem Tintenstrahldruckverfahren lassen sich auch großformatige Artikel mit hohen Geschwindigkeiten bedrucken. Beispielsweise beschreibt das Dokument EP 0 571 804 B1 eine Druckvorrichtung mit mehreren Druckköpfen, um großflächige Artikel zu bedrucken. Das Bedrucken eines dreidimensionalen Artikels wird beispielhaft in dem Dokument EP 1 225 053 A2 beschrieben.

Als Druckbild wird in den aus dem Stand der Technik bekannten Verfahren oftmals ein Vorlagendruckbild basierend auf bekannten Stammdaten, wie beispielsweise bekannten Abmessungen, des zu bedruckenden dreidimensionalen Artikels verwendet. Beispielsweise wird in der DE 10 2017 215 429 A1 ein derartiges Druckverfahren beschrieben. Aus dem Stand der Technik sind auch weitere Techniken zum Bereitstellen von Druckbildern bekannt. Beispielsweise beschreibt die DE 10 2012 006 371 A1 den Einsatz von 3D-Vermessung zur Erzeugung von Bahn-Daten für die Bewegung eines Druckkopfs, um ein Vorlagendruckbild basierend auf bekannten Stammdaten auf einen zu bedruckenden Bereich aufzubringen. DE 10 2012 006371 A1 und DE 10 2014 108092 A1 offenbaren ebenfalls den Einsatz von 3D-Vermessung zum Bedrucken von dreidimensionalen Artikeln.

Bei den bekannten Techniken, das heißt wenn ein bereits erstelltes Druckbild basierend auf bekannten Stammdaten verwendet wird, oder das Druckbild durch Skalierung auf die realen Dimensionen des zu bedruckenden Artikels angepasst wird, kommt es insbesondere beim vollflächigen Bedrucken des Artikels zu so großen Abweichungen, dass der Artikel nicht präzise genug bedruckt werden kann und hierdurch keine ausreichende Bedruckungsqualität erreicht wird.

Aufgabe der vorliegenden Erfindung ist es, ein verbessertes Verfahren zum Bedrucken eines dreidimensionalen Artikels bereitzustellen.

Diese Aufgabe wird durch ein Verfahren mit den Merkmalen des Anspruchs 1 gelöst. Danach wird ein Verfahren zum Bedrucken eines dreidimensionalen Artikels bereitgestellt, gemäss Anspruch 1.

Der dreidimensionale Artikel kann ein im Wesentlichen quaderförmiger oder würfelförmiger Körper sein, der von Rechtecken begrenzt wird und die Seitenflächen in einem rechten Winkel aufeinander stehen. Der dreidimensionale Artikel kann aber auch eine andere dreidimensionale Geometrie aufweisen, beispielsweise prismenförmig oder zylindrisch ausgestaltet sein, und von mehreren Flächen begrenzt werden. Beispielsweise kann der dreidimensionale Artikel ein elektronisches oder ein elektrisches Bauteil sein.

Der Begriff "zu bedruckender Bereich" kann hierin verwendet werden, um einen Bereich auf einer Oberfläche des dreidimensionalen Artikels zu bezeichnen, der vollständig oder teilweise bedruckt werden soll. Der zu bedruckende Bereich kann in Beispielen weiter in Teilbereiche unterteilt werden, die gleichartig oder unterschiedlich bedruckt werden können.

Der dreidimensionale Artikel kann während des Vermessens und Bedruckens räumlich mittels eines Haltemittels fixiert werden, so dass der zu bedruckende Artikel in der Position in der er vermessen wird auch bedruckt wird. Als bildgebendes dreidimensionales Verfahren kann beispielsweise ein Verfahren wie Lasertriangulation, Streifenlichtprojektion, Time-of-Flight, Shape-from-Shading, Photometrisches Stereo, Weißlicht Interferometrie oder eine Kombination dieser Verfahren verwendet werden.

Die Vermessungsdaten können dann elektronisch einer Recheneinheit zum Erzeugen des Druckbilds zur Verfügung gestellt werden. Basierend auf dem erzeugten Druckbild, kann der zu bedruckende Bereich mittels Digitaldruck, beispielsweise mittels eines Tintenstrahldruckkopfs bedruckt werden.

Vorteilhaft kann durch das Vermessen des zu bedruckenden Bereichs mittels eines bildgebenden dreidimensionalen Verfahrens und der anschließenden Erzeugung eines Druckbilds basierend auf den Vermessungsdaten, die von dem bildgebenden dreidimensionalen Verfahren erhalten wurden, auch tiefer liegende Konturen in dem zu bedruckenden Bereich erkannt werden und ein Abbild erhalten werden, in dem alle Toleranzen bereits enthalten sind. Beispielsweise können hiermit auch Kanten und Öffnungen, die nicht bedruckt werden sollen, präzise vermessen werden.

Im Vergleich zu einem Vermessen mittels eines bildgebenden zweidimensionalen Verfahrens ist die Kantenextraktion für die Bestimmung der Artikelgeometrie weitestgehend unabhängig von Reflexionseigenschaften der Oberfläche, wodurch unterschiedliche Farben oder Strukturen innerhalb des Materials keinen oder nur einen sehr geringen Einfluss auf die Vermessung haben. Weiterhin müssen bei dem bildgebenden dreidimensionalen Verfahren die Kanten oder Übergänge nicht approximiert werden, da sie im Vergleich zu einer zweidimensionalen Bildaufnahme einen sehr starken Wertunterschied im Bild aufweisen und keinen beleuchtungsabhängigen Helligkeitsverlauf. Zudem sind Höhenunterschiede innerhalb des Artikels messbar und können bei der Druckbildgenerierung behandelt werden, sofern sie die Erstellung des Druckbilds beeinflussen würden.

Erfindungsgemäss weist das Erzeugen des Druckbilds auf: Erkennen zumindest eines Teilbereichs in dem zu bedruckendenden Bereich, und Bereitstellen von Vermessungsdaten bezüglich des Teilbereichs.

Als Teilbereich kann ein Bereich in dem zu bedruckenden Bereich bezeichnet werden, der sich beispielsweise von dem Rest des zu bedruckenden Bereichs unterscheidet. Beispielsweise kann sich der Teilbereich durch eine unterschiedliche Höhe oder Geometrie, wie zum Beispiel winklige oder gebeugte Flächen, von dem restlichen zu bedruckenden Bereich, bzw. den restlichen Teilbereichen des zu bedruckenden Bereichs unterscheiden.

In einem Beispiel weist das Erkennen zumindest eines Teilbereichs auf:
Erkennen des Teilbereichs mittels eines Bildverarbeitungsverfahrens, und/oder
Vergleichen bekannter Geometrieinformationen bezüglich des Teilbereichs mit Geometrieinformationen in den Vermessungsdaten.

Beispielsweise können Bildverarbeitungsverfahren angewendet werden, wie Farbklassifikatoren, Hough-Transformation und Kontrastanalyse zur Erkennung von geometrischen Objekten, Gabor-Wavelets und Laplace-Filter zur Kantenerkennung, usw. Alternativ oder zusätzlich kann nach bekannten Geometrien gesucht werden, durch Vergleichen bekannter Geometrieinformationen bezüglich des Teilbereichs mit Geometrieinformationen in den Vermessungsdaten. In einem Beispiel weisen die Geometrieinformationen Höheninformationen und/oder Konturinformationen auf.

Erfindungsgemäss weist das Erzeugen des Druckbilds auf:
Erzeugen zumindest eines Teildruckbilds basierend auf dem Teilbereich des zu bedruckenden Bereichs; und
Erzeugen des Druckbilds basierend auf dem Teildruckbild.

Vorteilhaft kann hierdurch eine Behandlung von Druckflächen verschiedener Höhen und Geometrien stattfinden, wie z.B. für winklige oder gebeugte Flächen. In den bekannten zweidimensionalen Bildern können diese Informationen durch die Projektion auf die Bildebene nur näherungsweise oder gar nicht extrahiert werden.

Beispielsweise können, durch das Erzeugen zumindest eines Teildruckbilds, Regionen aufgefunden werden, die auf dem dreidimensionalen Artikel eingefärbt werden sollen und solche, die nicht bedruckt werden sollen, wie zum Beispiel die Kabeleinführschächte eines elektronischen oder elektrischen Bauteils.

In einem Beispiel weist das Erzeugen des Druckbilds auf:
Erzeugen einer Vielzahl von Teildruckbildern basierend jeweils auf einem Teilbereich des zu bedruckenden Bereichs; und
Erzeugen des Druckbilds basierend auf der Vielzahl von Teildruckbildern.

Vorteilhaft können hierdurch unterschiedliche Teilbereiche des dreidimensionalen Artikels unabhängig voneinander eingefärbt und zu einem finalen Druckbild zusammengefügt werden.

Vorteilhaft orientieren sich, bei einem solchen zusammengefügten Druckbild aus verschiedenen Teildruckbildern, die Flächen am realen zu bedruckenden Bereich des dreidimensionalen Artikels und werden nicht aus einem fertig erstellten Vorlagenbild basierend auf bekannten Stammdaten zusammengesetzt. Bei einem Vorlagendruckbild, das aus Vorlagen, basierend auf Stammdaten, zusammengesetzt wird, müsste eine Veränderung der Länge des zu bedruckenden Bereichs, d.h. im Vergleich von der Vorlage zu dem eigentlichen dreidimensionalen Artikel, durch eine Streckung des Druckbilds kompensiert werden. Dadurch ergeben sich unerwünschte und sichtbare Verformungen einzelner Teilbereiche im Bild, die dann auf dem dreidimensionalen Artikel zu erkennen sind. Beispielsweise werden runde Kabeleinführöffnungen dann nicht mehr rund sein, sondern durch eine Streckung zu einem Oval. Ähnliches gilt auch für rechteckige Bereiche, wie zum Beispiel für Pusher.

Vorteilhaft findet bei dem beschriebenen Verfahren keine Skalierung eines vordefinierten Vorlagendruckbildes, bzw. vordefinierter Druckbereiche statt, sondern die realen Geometrien des dreidimensionalen Artikels dienen als genaue Vorgaben für die Druckbildgenerierung.

In einem weiteren Beispiel basiert das Erzeugen des Druckbilds auf bekannten Stammdaten des dreidimensionalen Artikels.

Beispielsweise können einzelne Teildruckbilder, die sich auf Teilbereiche beziehen bei denen die Wahrscheinlichkeit einer Verformung von einem vordefinierten Vorlagendruckbild und dem tatsächlichen Bereich des Objekts gering ist, auch Vorlagendruckbilder als Teildruckbilder umfassen, um das Erzeugen des Druckbilds effizienter zu gestalten. In Beispielen der Erfindung, wird jedoch komplett auf die Verwendung von Vorlagendruckbildern verzichtet. In diesen Beispielen wird das Druckbild ausschließlich auf der Vielzahl von Teildruckbildern erzeugt, die jeweils auf einem Teilbereich des zu bedruckenden Bereichs basieren, die also vorher mittels des bildgebenden dreidimensionalen Verfahrens vermessen wurden.

In einem Beispiel ist das bildgebende dreidimensionale Verfahren, ein Verfahren oder eine Kombination von Verfahren aus der Gruppe:
Lasertriangulationsverfahren, Streiflichtprojektionsverfahren, Time-of-Flight-Verfahren, Shape-from-Shading-Verfahren, Photometrisches Stereo-Verfahren, und/oder Weißlicht Interferometrie-Verfahren.

In einem Beispiel weist das Vermessen auf:
dreidimensionales Vermessen des zu bedruckenden Bereichs mittels eines robotergeführten Messkopfs.

Hier kann beispielsweise der Messkopf relativ zu dem dreidimensionalen Artikel mit dem zu bedruckenden Bereich geführt werden. Hierfür kann der dreidimensionale Artikel stationär fixiert angeordnet sein, beispielsweise in einem Haltemittel angeordnet sein, das den dreidimensionalen Artikel während dem Vermessen, dem Bedrucken und dem Zeitraum dazwischen in einer vorgegebenen Position hält. Vorteilhaft kann hierdurch ein exaktes Bedrucken ermöglicht werden.

In einem Beispiel weist das Bedrucken auf:
dreidimensionaler Digitaldruck mittels eines robotergeführten Druckkopfs, insbesondere eines piezoelektrische Tintenstrahldruckkopfs.

Beispielsweise kann der Tintenstrahldruckkopf für eine als Drop-on-Demand bekannte Drucktechnik genutzt werden, bei der die Düsen des Druckkopfs für jeden einzelnen Tintentropfen des Schriftbildes geöffnet werden. Vorteilhaft werden nur Tintentropfen ausgestoßen, wenn sie tatsächlich benötigt werden. Die präzise Öffnung der Düsen kann in einem Beispiel piezoelektrisch erfolgen.

In einem Beispiel weist das Verfahren den Schritt auf:
Fixieren des Artikels während dem Vermessen und dem Bedrucken in einem Haltemittel, insbesondere einem beweglich angeordneten Haltemittel, das angepasst ist den dreidimensionalen Artikel während dem Vermessen und dem Bedrucken zu bewegen.

Beispielsweise kann zusätzlich oder alternativ zu dem Bewegen des Messkopfs und/oder des Druckkopfs der Artikel bewegt werden, um das Bedrucken des Artikels effizienter zu gestalten und zu beschleunigen.

Die Erfindung bezieht sich auch auf eine Vorrichtung zum Bedrucken eines dreidimensionalen Artikels, insbesondere zum Bedrucken mit einem Verfahren nach einem der vorangehenden Ansprüche, gemäss Anspruch 9.

In einem Beispiel weist das Mittel zum Vermessen zumindest einen robotergeführten Messkopf auf, zum dreidimensionalen Vermessen des zu bedruckenden Bereichs.

In einem Beispiel weist das Mittel zum Erzeugen des Druckbilds eine Recheneinheit auf.

In einem Beispiel weist das Mittel zum Bedrucken zumindest einen robotergeführten Druckkopf auf, insbesondere einen piezoelektrischen Tintenstrahldruckkopf.

In einem Beispiel weist die Vorrichtung zumindest ein Haltemittel zum Fixieren des dreidimensionalen Artikels während dem Vermessen und dem Bedrucken auf, insbesondere ein beweglich angeordnetes Haltemittel, das angepasst ist den dreidimensionalen Artikel während dem Vermessen und dem Bedrucken zu bewegen. Der der Erfindung zugrunde liegende Gedanke soll nachfolgend anhand von in den Figuren dargestellten Ausführungsbeispielen näher erläutert werden. Es zeigen:
- Fig. 1: eine schematische Ansicht einer Vorrichtung zum Bedrucken eines dreidimensionalen Artikels gemäß einer Ausführungsform; und
- Fig. 2: einen schematischen Verfahrensablauf eines Verfahrens zum Bedrucken eines dreidimensionalen Artikels gemäß einer Ausführungsform.

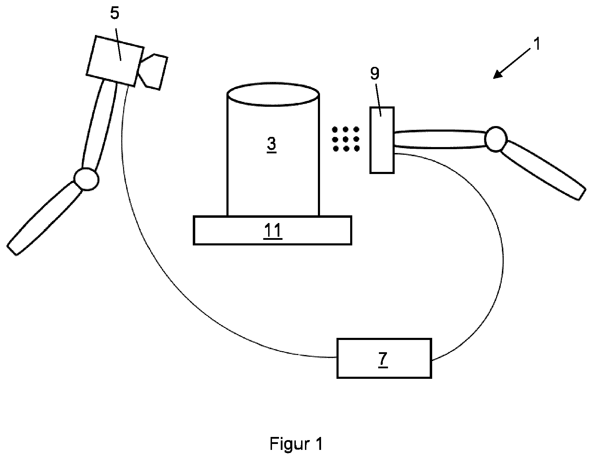

Figur 1 zeigt eine schematische Ansicht einer Vorrichtung 1 zum Bedrucken eines dreidimensionalen Artikels 3 gemäß einer Ausführungsform.

Die gezeigte Vorrichtung 1 zum Bedrucken eines dreidimensionalen Artikels 3 weist Mittel zum Vermessen 5 zumindest eines zu bedruckenden Bereichs des dreidimensionalen Artikels 3 mittels eines bildgebenden dreidimensionalen Verfahrens auf. In der gezeigten Ausführungsform weist das Mittel zum Vermessen 5 einen robotergeführten Messkopf auf, zum dreidimensionalen Vermessen des zu bedruckenden Bereichs. Als bildgebende dreidimensionale Verfahren können in Ausführungsformen Verfahren wie Lasertriangulation, Streifenlichtprojektion, Time-of-Flight, Shape-from-Shading, Photometrisches Stereo, Weißlicht Interferometrie oder eine Kombination dieser Verfahren verwendet werden.

In der gezeigten Ausführungsform kann das Mittel zum Vermessen 5 relativ zu dem dreidimensionalen Artikel 3 mit dem zu bedruckenden Bereich geführt werden. Hierfür ist der dreidimensionale Artikel 3 stationär fixiert in einem Haltemittel 11 angeordnet, das den dreidimensionalen Artikel 3 während dem Vermessen, dem Bedrucken und dem Zeitraum dazwischen in einer vorgegebenen Position hält. Die vorgegebene Position kann entweder stationär feststehend sein oder das Haltemittel 11 kann den dreidimensionalen Artikel 3 während dem Vermessen und dem Bedrucken bewegen.

Wie in Figur 1 gezeigt, ist das Mittel zum Vermessen 5 mit einem Mittel zum Erzeugen 7 eines Druckbilds verbunden. Das Mittel zum Erzeugen 7 eines Druckbilds umfasst in der dargestellten Ausführungsform eine Recheneinheit, die angepasst ist das Druckbild basierend auf den Vermessungsdaten von dem Mittel zum Vermessen 5 zu erzeugen.

Weiterhin ist in Figur 1 das Mittel zum Bedrucken 9 gezeigt, das auch mit dem Mittel zum Erzeugen 7 des Druckbilds verbunden ist. In der gezeigten Ausführungsform weist das Mittel zum Bedrucken 9 einen robotergeführten Druckkopf auf.

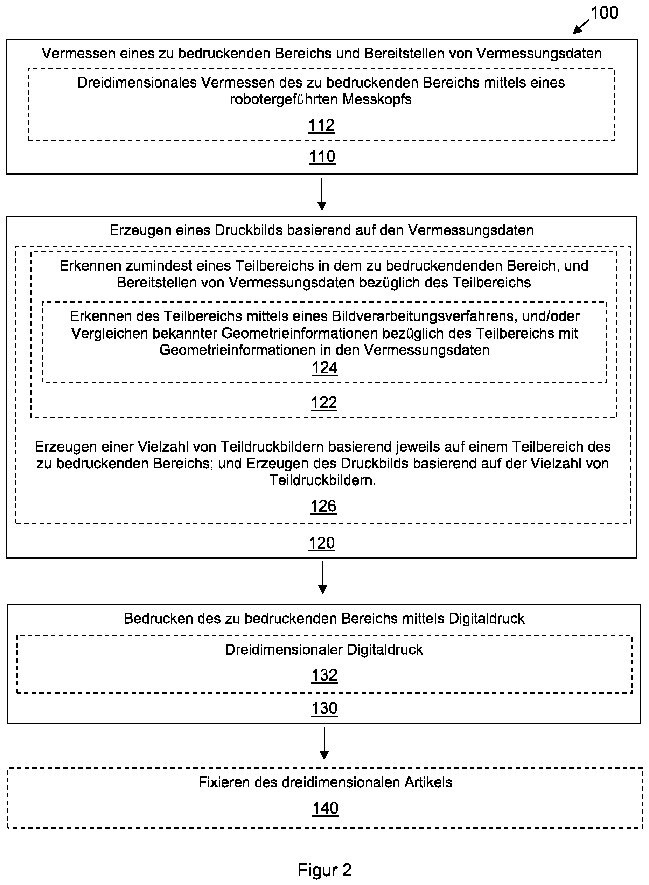

Figur 2 zeigt einen schematischen Verfahrensablauf eines Verfahrens 100 zum Bedrucken eines dreidimensionalen Artikels gemäß einer Ausführungsform.

Das Verfahren 100 weist die Schritte auf:
Vermessen 110 zumindest eines zu bedruckenden Bereichs des dreidimensionalen Artikels mittels eines bildgebenden dreidimensionalen Verfahrens und Bereitstellen von Vermessungsdaten bezüglich des zu bedruckenden Bereichs;
Erzeugen 120 eines Druckbilds basierend auf den Vermessungsdaten; und
Bedrucken 130 des zu bedruckenden Bereichs mittels Digitaldruck.

Die in Figur 2 mit einer gestrichelten Umrandung dargestellten Verfahrensschritte sind lediglich als optional zu verstehen und für die Durchführung der Erfindung nicht zwingend notwendig.

Demnach kann das Vermessen 110 des zu bedruckenden Bereichs optional den Schritt umfassen:
Dreidimensionales Vermessen 112 des zu bedruckenden Bereichs mittels eines robotergeführten Messkopfs.

Der Schritt bezüglich dem Erzeugen 120 eines Druckbilds basierend auf den Vermessungsdaten kann weiter optional den Schritt des Erzeugens 126 einer Vielzahl von Teildruckbildern basierend jeweils auf einem Teilbereich des zu bedruckenden Bereichs und Erzeugen des Druckbilds basierend auf der Vielzahl von Teildruckbildern umfassen. Das Erzeugen 126 kann optional ein Erkennen 122 zumindest eines Teilbereichs in dem zu bedruckenden Bereich und Bereitstellen von Vermessungsdaten bezüglich des Teilbereichs umfassen. Hierbei kann das Erkennen 122 ein Erkennen 124 des Teilbereichs mittels eines Bildverarbeitungsverfahrens umfassen, und/oder ein Vergleichen bekannter Geometrieinformationen bezüglich des Teilbereichs mit Geometrieinformationen in den Vermessungsdaten.

Das Bedrucken 130 des zu bedruckenden Bereichs mittels Digitaldruck kann optional den Schritt aufweisen: Dreidimensionaler Digitaldruck 132 mittels eines robotergeführten Druckkopfs, insbesondere eines piezoelektrische Tintenstrahldruckkopfs.

Weiterhin optional kann das Verfahren aufweisen:
Fixieren 140 des dreidimensionalen Artikels während dem Vermessen und dem Bedrucken in einem Haltemittel, insbesondere einem beweglich angeordneten Haltemittel, das angepasst ist den dreidimensionalen Artikel während dem Vermessen und dem Bedrucken zu bewegen.

### Bezugszeichenliste

- 1: Vorrichtung zum Bedrucken
- 3: Dreidimensionaler Artikel
- 5: Mittel zum Vermessen
- 7: Mittel zum Erzeugen
- 9: Mittel zum Bedrucken
- 11: Haltemittel

- 100: Verfahren zum Bedrucken
- 110: Vermessen
- 112: Dreidimensionales Vermessen
- 120: Erzeugen
- 122: Erkennen eines Teilbereichs
- 124: Erkennen mittels Bildverarbeitungsverfahren
- 126: Erzeugen einer Vielzahl von Teildruckbildern
- 130: Bedrucken
- 132: Dreidimensionsales Bedrucken
- 140: Fixieren

## Patentansprüche

1. Verfahren zum Bedrucken eines dreidimensionalen Artikels (3), aufweisend die Schritte:
Vermessen (110) zumindest eines zu bedruckenden Bereichs des dreidimensionalen Artikels (3) mittels eines bildgebenden dreidimensionalen Verfahrens und
Bereitstellen von Vermessungsdaten bezüglich des zu bedruckenden Bereichs;
Erzeugen (120) eines Druckbilds basierend auf den Vermessungsdaten, aufweisend:
Erkennen (122) zumindest eines Teilbereichs in dem zu bedruckendenden Bereich,
Bereitstellen von Vermessungsdaten bezüglich des Teilbereichs,
Erzeugen (126) einer Vielzahl von Teildruckbildern basierend jeweils auf einem Teilbereich des zu bedruckenden Bereichs, und
Erzeugen des Druckbilds basierend auf der Vielzahl von Teildruckbildern; und
Bedrucken (130) des zu bedruckenden Bereichs mittels Digitaldruck.

2. Verfahren nach Anspruch 1, **dadurch gekennzeichnet, dass** das Erkennen (122) zumindest eines Teilbereichs aufweist:
Erkennen (124) des Teilbereichs mittels eines Bildverarbeitungsverfahrens, und/oder Vergleichen bekannter Geometrieinformationen bezüglich des Teilbereichs mit Geometrieinformationen in den Vermessungsdaten.

3. Verfahren nach Anspruch 2, **dadurch gekennzeichnet, dass** die Geometrieinformationen Höheninformationen und/oder Konturinformationen aufweisen.

4. Verfahren nach einem der vorangehenden Ansprüche, **dadurch gekennzeichnet, dass** das Erzeugen des Druckbilds auf bekannten Stammdaten des dreidimensionalen Artikels (3) basiert.

5. Verfahren nach einem der vorangehenden Ansprüche, **dadurch gekennzeichnet, dass** das bildgebende dreidimensionale Verfahren, ein Verfahren oder eine Kombination von Verfahren ist aus der Gruppe:
Lasertriangulationsverfahren, Streiflichtprojektionsverfahren, Time-of-Flight-Verfahren, Shape-from-Shading-Verfahren, Photometrisches Stereo-Verfahren, und/oder Weißlicht Interferometrie-Verfahren.

6. Verfahren nach einem der vorangehenden Ansprüche, **dadurch gekennzeichnet, dass** das Vermessen (110) aufweist:
dreidimensionales Vermessen (112) des zu bedruckenden Bereichs mittels eines robotergeführten Messkopfs.

7. Verfahren nach einem der vorangehenden Ansprüche, **dadurch gekennzeichnet, dass** das Bedrucken (130) aufweist:
dreidimensionaler Digitaldruck (132) mittels eines robotergeführten Druckkopfs, insbesondere eines piezoelektrische Tintenstrahldruckkopfs.

8. Verfahren nach einem der vorangehenden Ansprüche, **gekennzeichnet durch:**
Fixieren des dreidimensionalen Artikels (3) während dem Vermessen (110) und dem Bedrucken (130) in einem Haltemittel (11), insbesondere einem beweglich angeordneten Haltemittel (11), das angepasst ist den dreidimensionalen Artikel (3) während dem Vermessen (110) und dem Bedrucken (130) zu bewegen.

9. Vorrichtung zum Bedrucken eines dreidimensionalen Artikels (3), insbesondere zum Bedrucken mit einem Verfahren nach einem der vorangehenden Ansprüche, aufweisend:
Mittel zum Vermessen (5) zumindest eines zu bedruckenden Bereichs des dreidimensionalen Artikels (3) mittels eines bildgebenden dreidimensionalen Verfahrens und zum Bereitstellen von Vermessungsdaten bezüglich des zu bedruckenden Bereichs;
Mittel zum Erzeugen (7) eines Druckbilds basierend auf den Vermessungsdaten, wobei das Erzeugen des Druckbilds aufweist:
Erkennen (122) zumindest eines Teilbereichs in dem zu bedruckendenden Bereich,
Bereitstellen von Vermessungsdaten bezüglich des Teilbereichs,
Erzeugen (126) einer Vielzahl von Teildruckbildern basierend jeweils auf einem Teilbereich des zu bedruckenden Bereichs; und
Erzeugen des Druckbilds basierend auf der Vielzahl von Teildruckbildern; und
Mittel zum Bedrucken (9) des zu bedruckenden Bereichs mittels Digitaldruck.

10. Vorrichtung nach Anspruch 9, **dadurch gekennzeichnet, dass** das Mittel zum Vermessen (5) zumindest einen robotergeführten Messkopf aufweist, zum dreidimensionalen Vermessen des zu bedruckenden Bereichs.

11. Vorrichtung nach Anspruch 9 oder 10, **dadurch gekennzeichnet, dass** das Mittel zum Erzeugen (7) des Druckbilds eine Recheneinheit aufweist.

12. Vorrichtung nach einem der Ansprüche 9 bis 11, **dadurch gekennzeichnet, dass** das Mittel zum Bedrucken (9) zumindest einen robotergeführten Druckkopf, insbesondere einen piezoelektrischen Tintenstrahldruckkopf, aufweist.

13. Vorrichtung nach einem der Ansprüche 9 bis 12, **gekennzeichnet durch** zumindest ein Haltemittel (11) zum Fixieren des dreidimensionalen Artikels (3) während dem Vermessen und dem Bedrucken, insbesondere ein beweglich angeordnetes Haltemittel (11), das angepasst ist den dreidimensionalen Artikel (3) während dem Vermessen (110) und dem Bedrucken (130) zu bewegen.

## Claims

1. Method for printing a three-dimensional article (3), comprising the steps:
measuring (110) at least one region to be printed of the three-dimensional article (3) by means of a three-dimensional imaging method and providing measurement data relating to the region to be printed;
generating (120) a printing image on the basis of the measurement data, comprising:
detecting (122) at least one subregion in the region to be printed,
providing measurement data relating to the subregion,
generating (126) a multiplicity of partial printing images respectively on the basis of a subregion of the region to be printed, and
generating the printing image on the basis of the multiplicity of partial printing images; and
printing (130) the region to be printed by means of digital printing.

2. Method according to Claim 1, **characterized in that** the detection (122) of at least one subregion comprises: detecting (124) the subregion by means of an image processing method, and/or comparing known geometrical information relating to the subregion with geometrical information in the measurement data.

3. Method according to Claim 2, **characterized in that** the geometrical information comprises height information and/or contour information.

4. Method according to one of the preceding claims, **characterized in that** the generation of the printing image is based on known master data of the three-dimensional article (3).

5. Method according to one of the preceding claims, **characterized in that** the three-dimensional imaging method is a method or a combination of methods from the group:
laser triangulation methods, structured light projection methods, time-of-flight methods, shape-from-shading methods, photometric stereo methods, and/or white light interferometry methods.

6. Method according to one of the preceding claims, **characterized in that** the measurement (110) comprises:
three-dimensional measurement (112) of the region to be printed by means of a robot-guided measurement head.

7. Method according to one of the preceding claims, **characterized in that** the printing (130) comprises:
three-dimensional digital printing (132) by means of a robot-guided printing head, in particular a piezoelectric inkjet printing head.

8. Method according to one of the preceding claims, **characterized by**:
fixing the three-dimensional article (3) during the measurement (110) and the printing (130) in a holding means (11), in particular a movably arranged holding means (11), which is configured to move the three-dimensional article (3) during the measurement (110) and the printing (130).

9. Device for printing a three-dimensional article (3), in particular for printing with a method according to one of the preceding claims, comprising:
means (5) for measuring at least one region to be printed of the three-dimensional article (3) by means of a three-dimensional imaging method and for providing measurement data relating to the region to be printed;
means (7) for generating a printing image on the basis of the measurement data, wherein the generation of the printing image comprises:
detecting (122) at least one subregion in the region to be printed,
providing measurement data relating to the subregion,
generating (126) a multiplicity of partial printing images respectively on the basis of a subregion of the region to be printed; and
generating the printing image on the basis of the multiplicity of partial printing images; and
means (9) for printing the region to be printed by means of digital printing.

10. Device according to Claim 9, **characterized in that** the measuring means (5) comprises at least one robot-guided measurement head for three-dimensional measurement of the region to be printed.

11. Device according to Claim 9 or 10, **characterized in that** the means (7) for generating the printing image comprises a computation unit.

12. Device according to one of Claims 9 to 11, **characterized in that** the printing means (9) comprises at least one robot-guided printing head, in particular a piezoelectric inkjet printing head.

13. Device according to one of Claims 9 to 12, **characterized by** at least one holding means (11) for fixing the three-dimensional article (3) during the measurement and the printing, in particular a movably arranged holding means (11), which is configured to move the three-dimensional article (3) during the measurement (110) and the printing (130).

## Revendications

1. Procédé d'impression sur un article tridimensionnel (3), comprenant les étapes suivantes :
la mesure (110) d'au moins une région de l'article tridimensionnel (3) à imprimer au moyen d'un procédé d'imagerie tridimensionnelle, et la fourniture de données de mesure relatives à la région à imprimer ;
la génération (120) d'une image d'impression sur la base des données de mesure, comprenant :
l'identification (122) d'au moins une région partielle dans la région à imprimer,
la fourniture de données de mesure relatives à la région partielle,
la génération (126) d'une pluralité d'images d'impression partielles respectivement sur la base d'une région partielle de la région à imprimer, et
la génération de l'image d'impression sur la base de la pluralité d'images d'impression partielles ; et
l'impression (130) de la région à imprimer au moyen d'une impression numérique.

2. Procédé selon la revendication 1, **caractérisé en ce que** l'identification (122) d'au moins une région partielle comprend :
l'identification (124) de la région partielle au moyen d'un procédé de traitement d'image et/ou la comparaison d'informations de géométrie connues relatives à la région partielle avec des informations de géométrie contenues dans les données de mesure.

3. Procédé selon la revendication 2, **caractérisé en ce que** les informations de géométrie comprennent des informations de hauteur et/ou des informations de contour.

4. Procédé selon l'une des revendications précédentes, **caractérisé en ce que** la génération de l'image d'impression est basée sur des données de départ connues de l'article tridimensionnel (3).

5. Procédé selon l'une des revendications précédentes, **caractérisé en ce que** le procédé d'imagerie tridimensionnelle est un procédé ou une combinaison de procédés appartenant au groupe comprenant :
un procédé de triangulation laser, un procédé de projection de lumière structurée, un procédé de temps de vol, un procédé de forme dérivée de l'ombrage, un procédé de stéréophotométrie, et/ou un procédé d'interférométrie en lumière blanche.

6. Procédé selon l'une des revendications précédentes, **caractérisé en ce que** la mesure (110) comprend :
la mesure tridimensionnelle (112) de la région à imprimer au moyen d'une tête de mesure guidée par robot.

7. Procédé selon l'une des revendications précédentes, **caractérisé en ce que** l'impression (130) comprend :
l'impression numérique tridimensionnelle (132) au moyen d'une tête d'impression guidée par robot, en particulier d'une tête d'impression piézoélectrique à jet d'encre.

8. Procédé selon l'une des revendications précédentes, **caractérisé par** :
l'immobilisation de l'article tridimensionnel (3) pendant la mesure (110) et l'impression (130) dans un moyen de retenue (11), en particulier un moyen de retenue (11) mobile, qui est conçu pour déplacer l'article tridimensionnel (3) pendant la mesure (110) et l'impression (130).

9. Dispositif d'impression sur un article tridimensionnel (3), en particulier d'impression par un procédé selon l'une des revendications précédentes, comprenant :
un moyen de mesure (5) d'au moins une région de l'article tridimensionnel (3) à imprimer au moyen d'un procédé d'imagerie tridimensionnelle et de fourniture de données de mesure relatives à la région à imprimer ;
un moyen de génération (7) d'une image d'impression sur la base des données de mesure, la génération de l'image d'impression comprenant :
l'identification (122) d'au moins une région partielle dans la région à imprimer,
la fourniture de données de mesure relatives à la région partielle,
la génération (126) d'une pluralité d'images d'impression partielles respectivement sur la base d'une région partielle de la région à imprimer ; et
la génération de l'image d'impression sur la base de la pluralité d'images d'impression partielles ; et
un moyen d'impression (9) de la région à imprimer au moyen d'une impression numérique.

10. Dispositif selon la revendication 9, **caractérisé en ce que** le moyen de mesure (5) comporte au moins une tête de mesure guidée par robot pour la mesure tridimensionnelle de la région à imprimer.

11. Dispositif selon la revendication 9 ou 10, **caractérisé en ce que** le moyen de génération (7) de l'image d'impression comporte une unité de calcul.

12. Dispositif selon l'une des revendications 9 à 11, **caractérisé en ce que** le moyen d'impression (9) comporte au moins une tête d'impression guidée par robot, en particulier une tête d'impression piézoélectrique à jet d'encre.

13. Dispositif selon l'une des revendications 9 à 12, **caractérisé par** au moins un dispositif de retenue (11) pour l'immobilisation de l'article tridimensionnel (3) pendant la mesure et l'impression, en particulier un dispositif de retenue (11) disposé de manière mobile, qui est conçu pour déplacer l'article tridimensionnel (3) pendant la mesure (110) et l'impression (130).
